(19) Europäisches Patentamt
European Patent Office
Office européen des brevets

(11) **EP 3 838 944 A1**

(12) **EUROPÄISCHE PATENTANMELDUNG**

(43) Veröffentlichungstag:
**23.06.2021 Patentblatt 2021/25**

(51) Int Cl.:
**C08G 18/10** $^{(2006.01)}$ **C08G 18/32** $^{(2006.01)}$
**C08G 18/73** $^{(2006.01)}$

(21) Anmeldenummer: **19216785.6**

(22) Anmeldetag: **17.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **THERMOPLASTISCHES ALIPHATISCHES POLYURETHANPOLYMER MIT NIEDRIGER KRISTALLISATIONSENTHALPIE**

(57)    Die vorliegende Erfindung betrifft thermoplastische aliphatische Polyurethanpolymere bei denen das Verhältnis $\overline{M}_z/\overline{M}_w$ in einem Bereich von 2,3 bis 6 liegt und einen Kristallinitätgrad $\chi$ im Bereich von 10 % bis 51 % aufweisen, Zusammensetzungen enthaltend solche Polyurethanpolymere, ein Verfahren zu deren Herstellung und die Verwendung dieser Polyurethanpolymere.

EP 3 838 944 A1

**Beschreibung**

Die vorliegende Erfindung betrifft thermoplastische aliphatische Polyurethanpolymere bei denen das Verhältnis $\overline{M_z}/\overline{M_w}$ in einem Bereich von 2,3 bis 6 liegt und einen Kristallinitätsgrad $\chi$ im Bereich von 10 % bis 51 % aufweisen, Zusammensetzungen enthaltend solche Polyurethanpolymere, ein Verfahren zu dessen Herstellung und die Verwendung dieser Polyurethanpolymere.

Polyurethane und insbesondere thermoplastische Polyurethane werden aufgrund ihrer hervorragenden physikalischen Eigenschaften seit Jahren für die unterschiedlichsten Einsatzzwecke verwendet. Trotz der breiten Verwendbarkeit von Polyurethanen gibt es Anwendungsbereiche, in denen andere Kunststoffe, wie beispielsweise Polyamid-Kunststoffe, verwendet werden, weil keine Polyurethane mit geeigneten physikalischen Eigenschaften verfügbar sind oder diese nur schwer bereitgestellt werden können.

Polyurethane, die aus kurzkettigen aliphatischen Diolen und kurzkettigen aliphatischen Polyisocyanaten aufgebaut sind, weisen vergleichbare oder bessere Eigenschaften zu den Polyamid-Kunststoffen auf, beispielsweise bezüglich der Lackierbarkeit des Kunststoffs. Thermoplastische Polyurethanpolymere, die eine geringere Kristallisationsenthalpie und geringere Kristallisationstemperatur aufweisen im Vergleich zu vergleichbaren thermoplastischen Polyurethanpolymeren mit gleichem Schmelzpunkt, sind besonders begehrt, da weniger Energie beim Kristallisieren frei wird, d.h. die Kristallinität ist geringer. Durch die geringere Kristallisation kommt es zu einem geringeren Schrumpf und damit zu einer höheren Maßhaltigkeit bei der Weiterverarbeitung/Extrusion/Spritzguss solcher thermoplastischer Polyurethanpolymere.

EP1846526A1 offenbart kristalline oder semikristalline Oligomer oder Polymere sowie Zusammensetzungen enthaltend diese Oligomere und Polymere für Pulverbeschichtungen. Die Oligomere und Polymere sind Polyurethane oder Polyester, die mindestens einen Polyether aufweisen sowie UV-härtbare Acrylatgruppen oder thermisch härtbare Diolgruppen.

EP2004720A1 offenbart Polyurethan erhältlich durch die Umsetzung von Polyisocyanaten mit verzweigten Polyolen und Diolen, sowie ein Verfahren zu dessen Herstellung. Beschrieben wird Polyurethan aufgebaut aus 1,5-Pentandiol, Trimethylolpropan und 4,4-Methylen-bis-(cyclohexylisocyanat), welches nach Alterung bei 25 °C für 7 Monate einen Kristallinitätsgrad von 42 % aufweist.

EP0433823A1 offenbart kristalline Isocyanatzusammensetzungen erhältlich aus einem hydrierten Diphenylmethandiisocyanat und 2-Methyl-1,3-propandiol.

Thermoplastische aliphatische Polyurethanpolymere werden in keiner der Druckschriften beschrieben.

Problematisch bei der Herstellung von thermoplastischen aliphatischen Polyurethanpolymeren ist, dass aufgrund der hohe Dichte an reaktiven Gruppen, die Polyaddition von kurzkettigen aliphatischen Diolen mit aliphatischen Polyisocyanaten eine hohe Wärmetönung bzw. Reaktionsenthalpie aufweist, was bei unzureichender Wärmeabfuhr zur Beschädigung, bspw. durch eine Verfärbung, bis hin zur Rückbildung von Monomeren und zur Zerstörung (Veraschung) des Polyurethanpolymers führt.

Es ist Aufgabe der vorliegenden Erfindung ein thermoplastisches aliphatisches Polyurethanpolymer mit einer geringeren Kristallisationsenthalpie und einer geringeren Kristallisationstemperatur bereitzustellen, als ein vergleichbares thermoplastisches aliphatisches Polyuethanpolymer sowie ein Verfahren zu dessen Herstellung.

Diese Aufgabe wurde gelöst durch ein thermoplastisches aliphatisches Polyurethanpolymer, dadurch gekennzeichnet, dass das Verhältnis $\overline{M_z} / \overline{M_w}$ des thermoplastischen aliphatischen Polyurethanpolymers in einem Bereich von 2,3 bis 6 liegt, wobei $\overline{M_z}$ das Zentrifugenmittel der Molmasse und $\overline{M_w}$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde und das thermoplastische aliphatische Polyurethanpolymer einen Kristallinitätsgrad $\chi$ im Bereich von 10 % bis 51 % aufweist, wobei der Kristallinitätsgrad $\chi$ gemäß der folgenden Gleichung bestimmt wird:

$$\chi = (\Delta H_{C,Polymer}/\Delta H_{Kristall,100\%}) \cdot 100\%,$$

wobei $\Delta H_{C,Polymer}$ die gemessene Kristallisationsenthalpie in [J/g] des thermoplastischen aliphatischen Polyurethanpolymers ist, ermittelt mit Dynamischer Differenzkalorimetrie gemäß DIN EN ISO 11357-1:2017-02 mit einer Kühlrate von 10 K/min im Bereich von 250 °C bis 20 °C, und

$\Delta H_{Kristall,100\%}$ die gemessene Schmelzenthalpie des entsprechenden zu 100 % kristallinen thermoplastischen aliphatischen Polyurethanpolymers in [J/g] ist, ermittelt mit Dynamischer Differenzkalorimetrie und Röntgenstreuanalyse. Hierzu wird die Schmelzenthalpie der Probe durch Dynamische Differenzkalorimetrie (DSC) gemessen und die Kristallinität der Probe mittels Röntgenstreuung ermittelt. Die Schmelzenthalpie wird vorzugsweise mit Dynamischer Differenzkalorimetrie ermittelt. Das Verhältnis der beiden Werte entspricht dann $\Delta H_{Kristall,100\%}$, gemäß der Literatur (Kajiyama, T.; MacKnight, W.J.; Polymer Journal, volume 1, 548-554 (1970)).

Es wurde überraschend gefunden, dass die erfindungsgemäßen thermoplastischen aliphatischen Polyurethanpolymere eine deutlich geringere Kristallisationsenthalpie und Kristallisationstemperatur aufweisen als vergleichbare thermoplastische Polyurethanpolymere mit gleichem Schmelzpunkt, welche mit einem herkömmlichen Batch-Verfahren hergestellt wurden. Dies führt dazu, dass die Energie, die bei der Kristallisation des erfindungsgemäßen Polyurethanpolymers frei wird, geringer ist als bei vergleichbaren nicht-erfinderischen Polyurethanpolymeren und hat den Vorteil, dass es zu einem geringeren Schrumpf und damit zu höherer Maßhaltigkeit bei der Weiterverarbeitung, beispielsweise der Extrusion oder dem Spritzguss kommt. Ferner hat dies den Vorteil, dass die Energie, die zum Aufschmelzen der erfindungsgemäßen thermoplastischen aliphatischen Polyurethanpolymere benötigt wird, deutlich geringer ist, als bei vergleichbaren thermoplastischen Polyurethanpolymeren. Das breite Verarbeitungsfenster durch die niedrigere Kristallisationstemperatur ist vorteilhaft, wenn während der Verarbeitung das Polymer für eine längere Zeit im schmelzflüssigen Zustand gehalten werden muss, wie beispielsweise bei großen Spritzgussbauteilen, im Mikrospritzguss oder erfahrungsgemäß beim Extrusionsschäumen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Unter "aliphatisch" oder "aliphatischer Rest" werden im Sinne der Erfindung azyklische gesättigte Kohlenwasserstoffreste verstanden, die verzweigt oder linear sowie vorzugsweise unsubstituiert sind. Diese aliphatischen Kohlenwasserstoffreste enthalten vorzugsweise 2, 3, 4, 5 oder 6 Kohlenstoffatome.

Bevorzugt bedeuten erfindungsgemäß die Ausdrücke "umfassend" oder "enthaltend", "im Wesentlichen bestehend aus" und besonders bevorzugt "bestehend aus".

Der Kristallinitätsgrad $\chi$ wird mittels Dynamischer Differenzkalorimetrie (DSC, Gerät Q2000, Fa TA Instruments) gemäß DIN EN ISO 11357-1:2017-02 mit einer Kühlrate von 10 K/min im Bereich von 250 °C bis 20 °C ermittelt und nach folgender Gleichung bestimmt:

$$\chi = (\Delta H_{C,Polymer} / \Delta H_{Kristall,100\%}) \cdot 100\%,$$

wobei $\Delta H_{C,Polymer}$ die gemessene Kristallisatiosenthalpie in [J/g] des thermoplastischen aliphatischen Polyurethanpolymers ist, ermittelt mit Dynamischer Differenzkalorimetrie gemäß DIN EN ISO 11357-1:2017-02 mit einer Kühlrate von 10 K/min im Bereich von 250 °C bis 20 °C unter Stickstoffatmosphäre und $\Delta H_{Kristall,100\%}$ die gemessene Schmelzenthalpie des entsprechenden zu 100 % kristallinen thermoplastischen aliphatischen Polyurethanpolymers in [J/g] ist, ermittelt mit Dynamischer Differenzkalorimetrie und Röntgenstreuanalyse. Hierzu wird die Schmelzenthalpie der Probe durch Dynamische Differenzkalorimetrie (DSC) gemessen, vorzugsweise mit Dynamischer Differenzkalorimetrie und die Kristallinität der Probe mittels Röntgenstreuung ermittelt. Das Verhältnis der beiden Werte entspricht dann $\Delta H_{Kristall,100\%}$, gemäß der Literatur (Kajiyama, T.; MacKnight, W.J.; Polymer Journal, volume 1, 548-554 (1970)).

Für ein Polymer aufgebaut aus 1,6-Diisocyanatohexan (HDI) und 1,4-Butandiol ist in der Literatur (Kajiyama, T.; MacKnight, W.J.; Polymer Journal, volume 1, 548-554 (1970)) ein Wert für $\Delta H_{Kristall,100\%}$ von 188 J/g bestimmt worden ermittelt nach dem oben beschriebenen Verfahren.

Falls nicht explizit anders angegeben, werden in der vorliegende Erfindung das Zentrifugenmittel der Molmasse $\overline{M}_z$, das Massenmittel der Molmasse $\overline{M}_w$ und das Zahlenmittel der Molmasse $\overline{M}_n$ mittels Gelpermeationschromatographie (GPC) unter Verwendung von Polymethylmethacrylat als Standard bestimmt. Die zu vermessende Probe wird in einer Lösung von 3 g Kaliumtrifluoracetat in 400 Kubikzentimeter Hexafluorisopropanol aufgelöst (Probenkonzentration ca. 2 mg/Kubikzentimeter), dann mit einer Flussrate von 1 Kubikzentimeter/Minute über eine Vorsäule gegeben und anschließend über drei in Reihe geschaltete Chromatographiesäulen getrennt, zuerst über eine 1000 Å PSS PFG 7 $\mu$m Chromatographiesäule, dann über eine 300 Å PSS PFG 7 $\mu$m Chromatographiesäule und zuletzt über eine 100 Å PSS PFG 7 $\mu$m Chromatographiesäule. Als Detektor wurde ein Brechungsindex-Detektor (RI-Detektor) verwendet.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2} \quad \text{in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i} \quad \text{in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Zahlenmittel der Molmasse $\overline{M}_n$ wurde ebenfalls aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion i, in mol ist.

Falls nicht explizit anders angegeben, wird die Kristallisationstemperatur mittels Dynamischer Differenzkalorimetrie (DSC, Gerät Q2000, Fa TA Instruments) gemäß DIN EN ISO 11357-1:2017-02 mit einer Kühlrate von 10 K/min im Bereich von 250 °C bis 20 °C ermittelt. Es werden zwei Aufheizungen und eine Abkühlung im Bereich 20 °C bis 250 °C mit einer Heiz-/Kühlrate von 10 K/min durchgeführt. Das Peakminimum der DSC Kühlkurve (exotherm nach unten) wird als Kristallisationstemperatur definiert.

In einer bevorzugten Ausführungsform weist das erfindungsgemäße thermoplastische aliphatische Polyurethanpolymer einen Kristallinitätsgrad $\chi$ im Bereich von 20 % bis 51 %, bevorzugt im Bereich von 30 % bis 50 %, besonders bevorzugt im Bereich von 40 % bis 50 % auf.

In einer weiteren bevorzugten Ausführungsform liegt das Verhältnis $\overline{M}_w / \overline{M}_n$ des erfindungsgemäßen thermoplastischen aliphatischen Polyurethanpolymers in einem Bereich von 3 bis 8, vorzugsweise in einem Bereich von 4 bis 6, besonders bevorzugt in einem Bereich von 4,5 bis 6, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

In einer weiteren bevorzugten Ausführungsform liegt das Verhältnis $\overline{M}_z / \overline{M}_w$ des erfindungsgemäßen thermoplastischen aliphatischen Polyurethanpolymers in einem Bereich von 2,5 bis 5 vorzugsweise in einem Bereich von 2,5 bis 4, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

Zur Herstellung der erfindungsgemäßen thermoplastischen aliphatischen Polyurethanpolymere werden eine oder mehrere aliphatische Polyisocyanate mit einem oder mehreren aliphatischen Polyolen umgesetzt.

Als aliphatische Polyisocyanate eignen sich alle dem Fachmann bekannten aliphatischen Polyisocyanate, insbesondere monomere aliphatische Diisocyanate. Geeignete Verbindungen sind vorzugsweise solche des Molekulargewichtsbereiches von ≥ 140 g/mol bis ≤ 400 g/mol, wobei es unerheblich ist, ob diese mittels Phosgenierung oder nach phosgenfreien Verfahren erhalten wurden. Die Polyisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

Im Rahmen der vorliegenden Erfindung wird unter dem Begriff "monomeres Diisocyanat" ein Diisocyanat verstanden, welches keine dimeren, trimeren etc. Strukturen aufweist, Teil von dimeren, trimeren etc. Strukturen ist und/oder ein Reaktionsprodukt von einer NCO-Gruppe mit einer NCO-reaktiven Gruppe, wie beispielsweise Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen.

In einer bevorzugten Ausführungsform ist das eine oder sind die mehreren aliphatischen Polyisocyanate ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus. In einer anderen bevorzugten Aufführungsform werden 1,5-Diisocyanatopentan und / oder 1,6-Diisocyanatohexan als aliphatische Polyisocyanate eingesetzt. In einer weiteren bevorzugten Aufführungsform wird nur 1,6-Diisocyanatohexan als aliphatisches Polyisocyanate eingesetzt.

Als aliphatische Polyole eignen sich alle dem Fachmann bekannten organische Diole, die ein Molekulargewicht von 62 g/mol bis 210 g/mol, vorzugsweise Diole, die ein Molekulargewicht im Bereich von 62 g/mol bis 120 g/mol aufweisen. Die Diole und / oder deren Vorläuferverbindungen können aus fossilen oder biologischen Quellen gewonnen worden sein. Bevorzugt sind die aliphatischen Diole zum Aufbau des erfindungsgemäßen thermoplastischen Polyurethanpolymers ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol und 1,6-Hexandiol oder einer Mischung aus mindestens zwei hieraus. Vorzugsweise werden keinen verzweigten aliphatischen Diole eingesetzt

In einer bevorzugten Ausführungsform ist das eine oder sind die mehreren aliphatischen Diole ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus. In einer weiteren bevorzugten Aufführungsform werden 1,3-Propandiol, 1,4-Butandiol, 1,6-Hexandiol und / oder Mischungen aus mindestens zwei hieraus als aliphatische Diole eingesetzt. In einer weiteren bevorzugten Aufführungsform werden 1,4-Butandiol und / oder 1,6-Hexandiol als aliphatische Diole eingesetzt. In einer anderen bevorzugten Aufführungsform wird nur 1,4-Butandiol als aliphatisches Diol eingesetzt.

In einer weiteren bevorzugten Ausführungsform ist das erfindungsgemäße thermoplastische aliphatische Polyurethanpolymer durch Umsetzung von einem oder mehreren aliphatischen Polyisocyanaten mit einem Molekulargewicht im Bereich von $\geq$ 140 g/mol bis $\leq$ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Polyolen, vorzugsweise einem oder mehreren aliphatischen Diolen mit einem Molekulargewicht im Bereich von 62 g/mol bis 210 g/mol, besonders bevorzugt einem oder mehreren aliphatischen Diolen mit einem Molekulargewicht im Bereich von 62 g/mol bis 120 g/mol erhältlich.

In einer weiteren bevorzugten Ausführungsform besteht das erfindungsgemäße thermoplastische aliphatische Polyurethanpolymer zu mindestens 80 Gew.-%, vorzugsweise zu mindestens 90 Gew.-%, besonders bevorzugt zu mindestens 95 Gew.-%, noch bevorzugter zu mindestens 98 Gew.-%, noch mehr bevorzugter zu mindestens 99 Gew.-%, und am bevorzugtesten zu mindestens 99,9 Gew.-% aus dem Reaktionsprodukt der Umsetzung von 1,6-Hexamethylendiisocyanat mit 1,4-Butandiol, bezogen auf die Gesamtmasse des thermoplastischen aliphatischen Polyurethanpolymers. Bei der Ermittlung des Anteils des Reaktionsprodukts der Umsetzung von 1,6-Hexamethylendiisocyanat mit 1,4-Butandiol werden nur die polymeren Bestandteile betrachtet, bezogen auf die Gesamtmasse des polymeren thermoplastischen aliphatischen Polyurethanpolymers.

In einer weiteren bevorzugten Ausführungsform weist das erfindungsgemäße thermoplastische aliphatische Polyurethanpolymer eine Peak-Kristallisationstemperatur im Bereich von 130 °C bis 145 °C aufweist, vorzugsweise eine Peak-Kristallisationstemperatur im Bereich von 140 °C bis 145 °C auf, bestimmt mit Dynamischer Differenzkalorimetrie (DSC) gemäß DIN EN ISO 11357-1:2017-02.

Eine weiterer Gegenstand der Erfindung betrifft ein Verfahren zur Herstellung eines erfindungsgemäßen thermoplastischen aliphatischen Polyurethanpolymers wobei in einem ersten Schritt zumindest ein oder mehrere aliphatische Polyisocyanate mit einem oder mehreren aliphatischen Polyolen, gegebenenfalls in Gegenwart eines Katalysators und/ oder Hilfs- und Zusatzstoffen, zu mindestens einem Prepolymer umgesetzt, vorzugsweise zu mindestens einem Hydroxy-terminierten Prepolymer werden, und das im ersten Schritt erhaltende mindestens eine Prepolymer in einem zweiten Schritt mit mindestens einem Kettenverlängerer, vorzugsweise mindestens einem Polyisocyanat, besonders bevorzugt mindestens einem Diisocyanat, zum thermoplastischen Polyurethanpolymer umgesetzt wird.

Das molare NCO/OH-Verhältnis liegt vorzugsweise im Bereich von 0,95 : 1,00 bis 1,05 : 1,00.

In einer bevorzugten Ausführungsform des erfindungsgemäßen Verfahrens werden unabhängig voneinander als aliphatisches Polyisocyanat ein aliphatisches Diisocyanat eingesetzt, vorzugsweise ein aliphatisches Polyisocyanat eingesetzt ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan und/oder Mischungen aus mindestens 2 hieraus, besonders bevorzugt ein aliphatisches Polyisocyanat eingesetzt ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch bevorzugter als aliphatisches Polyisocyanat 1,6-Diisocyanatohexan (HDI) eingesetzt, und als aliphatisches Polyol ein aliphatisches Diol eingesetzt, vorzugsweise ein aliphatisches Polyol eingesetzt ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und/oder Mischungen aus mindestens 2 hieraus, besonders bevorzugt ein aliphatisches Polyol eingesetzt ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, noch bevorzugter als aliphatisches Polyol 1,4-Butandiol eingesetzt.

In einer bevorzugten Ausführungsform des erfindungsgemäßen Verfahrens wird als aliphatisches Polyisocyanat 1,6-Diisocyanatohexan (HDI) eingesetzt und als aliphatisches Polyol 1,4-Butandiol eingesetzt.

Die Umsetzung der eine oder mehrere aliphatische Polyisocyanate mit einem oder mehreren aliphatischen Polyolen zur Erzeugung des erfindungsgemäßen thermoplastischen aliphatischen Polyurethanpolymers kann in Gegenwart von einem oder mehreren Katalysatoren stattfinden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 Gew.-% bis 2,0 Gew.-%, bevorzugt von 0,005 Gew.-% bis 1,0 Gew.-% besonders bevorzugt von 0,01 Gew.-% bis 0,1 Gew.-% bezogen auf die Diisocyanatkomponente eingesetzt. Der Katalysator kann in Substanz eingesetzt werden oder gelöst in der Diol-Komponente. Ein Vorteil ist hierbei, dass die dann erhaltenen thermoplastischen Polyurethane keine Verunreinigungen durch gegebenenfalls mitverwendete Lösungsmittel für den Katalysator enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Lösungsmittel für den Katalysator sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für den Katalysator zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-l,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Bei Hilfs- und Zusatzstoffen kann es sich beispielsweise um im Bereich der Thermoplasttechnologie gängige Hilfs- und Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Hilfs- und Zusatzstoffe handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Hilfs- und Zusatzstoffe mehrerer Typen zu verwenden.

Im Rahmen der vorliegenden Erfindung wird unter einem "Hydroxy-terminierten Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere HydroxyGruppen, NCO-Gruppen oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

Im Rahmen der vorliegenden Erfindung wird unter einem "nicht-reaktiv terminierten Prepolymer" ein Prepolymer verstanden, bei dem die reaktiven Gruppen (NCO-Gruppen oder OH-Gruppen) durch Reaktion mit geeigneten Reaktionspartnern (Kettenabbrechern) in chemische Gruppen umgewandelt wurden, die unter den genannten Reaktionsbedingungen weder mit NCO-Gruppen, noch mit OH-Gruppen reagieren. Als Kettenabbrecher eignen sich beispielsweise Mono-Alkohole wie Methanol, Mono-Amine wie Diethylamin und Monoisocyanate wie Butylisocyanat. Der molare Anteil der Kettenabbrecher kann beispielsweise von 0,001 mol-% bis 2 mol-% und bevorzugt von 0,002 mol-% bis 1 mol-% betragen, jeweils bezogen auf die Gesamtstoffmenge der entsprechenden Monomerkomponente.

Das mindestens eine Hydroxy-terminierte Prepolymer kann beispielsweise aus der Gesamtmenge der aliphatischen Polyole und einer ersten Teilmenge der aliphatischen Polyisocyanate gebildet werden. In einem oder mehreren darauffolgenden Schritten können dann weitere Teilmengen der aliphatischen Polyisocyanate, d.h. eine zweite, dritte etc. Teilmenge hinzugefügt werden, um weitere erfindungsgemäße, im Mittel höher molekulare, Hydroxy-terminierte Prepolymere aufzubauen. Alternativ kann das mindestens eine Hydroxy-terminierte Prepolymer beispielsweise aus einer ersten Teilmenge der aliphatischen Polyole und einer ersten Teilmenge der aliphatischen Polyisocyanate gebildet werden. In einer oder mehreren darauffolgenden Verfahrensstufen können dann weitere Teilmengen der aliphatischen Polyole und der aliphatischen Polyisocyanate zugeführt werden, um weitere im Mittel höher molekulare Hydroxy-terminierte Prepolymere aufzubauen.

Die Umsetzung kann mit oder ohne Katalysator durchgeführt werden, allerdings ist eine katalysierte Umsetzung bevorzugt. Als Katalysatoren eigenen sich die oben aufgeführten Katalysatoren. Die Umsetzung kann Lösungsmittelfrei oder in Lösung erfolgen. In Lösung bedeutet, dass zumindest einer der Reaktionspartner in einem Lösungsmittel gelöst ist, bevor er zu dem anderen Reaktionspartner gegeben wird. Vorzugsweise wird die Umsetzung Lösungsmittelfrei durchgeführt. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt.

Die Temperaturen zur Bildung des mindestens einen Prepolymers, vorzugsweise Hydroxy-terminierten Prepolymers, durch das erfindungsgemäße Verfahren können in Abhängigkeit von den eingesetzten Verbindungen ausgewählt werden. Bevorzugt ist hierbei jedoch, wenn die Umsetzung bei Temperaturen von $\geq 40\,°C$ bis $\leq 260\,°C$, vorzugsweise von $\geq 60\,°C$ bis $\leq 250\,°C$, bevorzugter von $\geq 100\,°C$ bis $\leq 240\,°C$, besonders bevorzugt von $\geq 120\,°C$ bis $\leq 220\,°C$ durchgeführt wird. Dabei wird toleriert, dass das Produkt bei der Umsetzung kurzfristige (< 60 Sekunden) Abweichungen der Reaktionstemperatur von den oben genannten Bereichen erfährt.

Das so erzeugte mindestens eine Prepolymer, vorzugsweise Hydroxy-terminierte Prepolymer, kann beispielsweise in mindestens einer weiteren Verfahrensstufe mit mindestens einem Kettenverlängerer zum thermoplastischen Polyurethanpolymer umgesetzt werden. Dabei können entweder die Gesamtmengen der beiden Komponenten, d.h. des erzeugten mindestens einen Prepolymers, vorzugsweise Hydroxy-terminierten Prepolymers, und des mindestens einen Kettenverlängerers, miteinander in einer Verfahrensstufe umgesetzt werden oder es wird eine Teilmenge der einen Komponente mit der Gesamtmenge oder einer Teilmenge der anderen Komponente in mehreren Verfahrensstufen umgesetzt. Vorzugsweise werden ein oder mehrere aliphatische Diisocyanate mit einem Molekulargewicht von 140 g/mol bis 170 g/mol als Kettenverlängerer eingesetzt.

Wenn es sich bei dem Prepolymer um ein Hydroxy-terminiertes Prepolymere handelt, dann kann dieses mit Hydroxygruppenreaktiven Kettenverängerern wie beispielsweise Polyisocyanaten umgesetzt werden. Als Polyisocyanate eigen sich dabei alle dem Fachmann bekannten Polyisocyanate. Vorzugsweise werden ein oder mehrere aliphatische Diisocyanate mit einem Molekulargewicht von 140 g/mol bis 170 g/mol als Kettenverlängerer eingesetzt. Wenn es sich bei dem Prepolymer um ein NCO-terminierten Prepolymer handelt, dann kann dieses mit NCO-reaktiven Kettenverängerern wie beispielsweise organischen Diolen, Thiolen, Diaminen und Mischungen aus mindestens zwei hiervon umgesetzt werden. Geeignete organische Diole, Thiole und Diamine sind dem Fachmann bekannt. Die Umsetzung des Prepolymers mit dem Ketternverlängerer zum Polymer kann beispielsweise in einem Extruder erfolgen.

Die Temperaturen zur Bildung des erfindungsgemäßen thermoplastischen Polyurethanpolymers durch Umsetzung des mindestens einen Prepolymers, vorzugsweise Hydroxy-terminierten Prepolymers, mit dem mindestens einen Kettenverlängerer im erfindungsgemäßen Verfahren können in Abhängigkeit von den eingesetzten Verbindungen ausgewählt werden. Bevorzugt ist hierbei jedoch, wenn die Umsetzung bei Temperaturen von $\geq$ 60 °C bis $\leq$ 260 °C, vorzugsweise von $\geq$ 80 °C bis $\leq$ 250 °C, besonders bevorzugt von $\geq$ 100 °C bis $\leq$ 245 °C und ganz besonders bevorzugt von $\geq$ 120 °C bis $\leq$ 240 °C durchgeführt wird. Dabei wird toleriert, dass das Produkt bei der Umsetzung kurzfristige (< 60 Sekunden) Abweichungen der Reaktionstemperatur von den oben genannten Bereichen erfährt.

Die Verfahrensstufen zur Erzeugung des erfindungsgemäßen thermoplastischen aliphatischen Polyurethanpolymers kann in einem einzelnen Apparat oder in einer Vielzahl von Apparaten durchgeführt werden. Beispielsweise kann die Erzeugung des Prepolymers, vorzugsweise Hydroxy-terminierten Prepolymers, zunächst in einem ersten Apparat (z.B. Loop-Reaktor oder kühlbarer Mischer) durchgeführt werden und dann das Reaktionsgemisch in einen weiteren Apparat (z.B. Extruder oder andere Hochviskosreaktoren) überführt werden, um das erfindungsgemäße thermoplastische aliphatische Polyurethanpolymer zu erzeugen.

In einer weiteren bevorzugten Ausführungsform findet die Umsetzung des mindestens einen Prepolymers, vorzugsweise Hydroxy-terminierten Prepolymers, mit dem mindestens einen Kettenverlängerer in einem Extruder statt.

In einer weiteren bevorzugten Ausführungsform findet die Herstellung des erfindungsgemäßen thermoplastischen aliphatischen Polyurethanpolymers in einer Kombination eines Loop-Reaktors mit einem Extruder statt.

In einer weiteren bevorzugten Ausführungsform findet die Herstellung des erfindungsgemäßen thermoplastischen aliphatischen Polyurethanpolymers in einer Kombination eines Statikmischers, Dynamikmischers, Loop-Reaktors oder Mischer-Wärmeübertragers mit einem beheiztem Transportband statt.

Im Anschluss an die Umsetzung zum erfindungsgemäßen thermoplastischen aliphatischen Polyurethanpolymer wird dieses in eine Handelsform gebracht, typischerweise Granulat. Nach der Umsetzung in der finalen Verfahrensstufe liegt das erfindungsgemäße thermoplastischen aliphatischen Polyurethanpolymer im schmelzeflüssigen Zustand vor, wird im Schmelzezustand zerkleinert und durch Abkühlung zum Erstarren gebracht oder zuerst durch Abkühlen zum Erstarren gebracht und anschließend zerkleinert. Dies kann beispielsweise mit den dem Fachmann bekannten Methoden der Stranggranulierung, der Unterwasser-Stranggranulierung, der Wasserringgranulierung und der Unterwassergranulierung geschehen. Die Abkühlung erfolgt bevorzugt mit Wasser; auch eine Abkühlung mit Luft oder anderen Medien ist möglich.

Nach Umsetzung auf einem Bandreaktor kann das erfindungsgemäße thermoplastische aliphatische Polyurethanpolymer auch abgekühlt, gebrochen und gemahlen werden.

Das so erhaltene erfindungsgemäße thermoplastische aliphatische Polyurethanpolymer kann erfindungsgemäß in einem Feststoffmischprozess gemischt und in einem weiteren Extruder aufgeschmolzen und wieder granuliert werden. Dies ist vor allem dann bevorzugt, wenn erfindungsgemäße thermoplastische aliphatische Polyurethanpolymer nach dem Bandreaktor gekühlt und gemahlen wird, weil dieser Vorgang auch die Produktform homogenisiert.

Das erfindungsgemäße Herstellungsverfahren kann kontinuierlich oder diskontinuierlich, d.h. als Batch-Verfahren oder Semi-Batch-Verfahren durchgeführt werden.

Eine weitere Ausführungsform der Erfindung betrifft ein thermoplastisches aliphatisches Polyurethanpolymer erhältlich oder erhalten durch das erfindungsgemäße Verfahren.

Eine weitere Ausführungsform der Erfindung betrifft eine Zusammensetzung enthaltend mindestens ein erfindungsgemäßes thermoplastisches aliphatisches Polyurethanpolymer und mindestens ein Additiv und / oder ein weiteres thermoplastisches Polymer. Als Additive eigenen sich alle oben genannten Zusatzstoffe und Hilfsstoffe. Geeignete thermoplastische Polymere, die Bestandteil der erfindungsgemäßen Zusammensetzung sein können, sind beispielsweise Polystyrole, Polyamide, Polyethylen, Polypropylen, Polyacrylate, Polymethacrylate, Polyurethane oder auch Acrylnitril-Butadien-Styrol-Copolymere (ABS).

Aus den erfindungsgemäßen Zusammensetzungen können thermoplastische Formmassen hergestellt werden. Ein weiterer Gegenstand der Erfindung ist daher eine thermoplastische Formmasse, welche mindestens eine erfindungsgemäße Zusammensetzung umfasst. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 180 °C bis 320 °C, besonders bevorzugt bei 200 °C bis 300 °C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert oder schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen thermoplastischen Formmassen können zur Herstellung von Formkörpern, Folien und / oder Fasern jeder Art verwendet werden. Ein weiterer Gegenstand der Erfindung ist daher ein Formkörper, eine Folie und / oder eine Faser, wobei der Formkörper, die Folie oder die Faser mindestens ein erfindungsgemäßes thermoplastisches Polyurethanpolymer, mindestens eine erfindungsgemäße thermoplastische Formmasse oder mindestens eine erfindungsgemäße Zusammensetzung umfasst. Diese können beispielsweise durch Spritzguss, Extrusion, Blasformverfahren und / oder Schmelzspinnen hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörper zu verarbeiten.

Ein weiterer Gegenstand der Erfindung ist die Verwendung eines erfindungsgemäßen thermoplastischen Polyurethanpolymers, einer erfindungsgemäßen thermoplastischen Formmasse oder einer erfindungsgemäßen Zusammensetzung zur Herstellung eines Formkörpers, einer Folie und / oder einer Faser.

Ein weiterer Gegenstand der Erfindung ist die Verwendung eines erfindungsgemäßen thermoplastischen Polyurethanpolymers zur Herstellung einer Zusammensetzung, einer thermoplastischen Formmasse oder einer Polyurethan-Dispersion.

Ein weiterer Gegenstand der Erfindung ist ein Artikel umfassend oder enthaltend eine erfindungsgemäße thermoplastische Formmasse oder eine erfindungsgemäße Zusammensetzung.

Die Erfindung betrifft insbesondere die folgenden Ausführungsformen:

In einer ersten Ausführungsform betrifft die Erfindung ein thermoplastisches aliphatisches Polyurethanpolymer, dadurch gekennzeichnet, dass das Verhältnis $\overline{M}_z / \overline{M}_w$ des thermoplastischen aliphatischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde und das thermoplastisches aliphatisches Polyurethanpolymer einen Kristallinitätsgrad $\chi$ im Bereich von 10 % bis 51 % aufweist, wobei der Kristallinitätsgrad $\chi$ gemäß der folgenden Gleichung bestimmt wird:

$$\chi = (\Delta H_{C,Polymer}/\Delta H_{Kristall,100\%}) \cdot 100\%,$$

wobei $\Delta H_{C,Polymer}$ die gemessene Kristallisationsenthalpie in [J/g] des thermoplastischen aliphatischen Polyurethanpolymers ist, ermittelt mit Dynamischer Differenzkalorimetrie (DSC) gemäß DIN EN ISO 11357-1:2017-02 mit einer Kühlrate von 10 K/min im Bereich von 250 °C bis 20 °C, und

$\Delta H_{Kristall,100\%}$ die Schmelzenthalpie des entsprechenden zu 100 % kristallinen thermoplastischen aliphatischen Polyurethanpolymers in [J/g] ist, ermittelt mit Dynamischer Differenzkalorimetrie und Röntgenstreuanalyse.

In einer zweiten Ausführungsform betrifft die Erfindung ein thermoplastisches aliphatisches Polyurethanpolymer nach Ausführungsform 1, wobei das thermoplastische aliphatische Polyurethanpolymer einen Kristallinitätsgrad $\chi$ im Bereich von 20 % bis 51 %, bevorzugt im Bereich von 30 % bis 50 %, besonders bevorzugt im Bereich von 40 % bis 50 % aufweist.

In einer dritten Ausführungsform betrifft die Erfindung ein thermoplastisches aliphatisches Polyurethanpolymer nach einer der Ausführungsformen 1 oder 2, wobei das Verhältnis $\overline{M}_w/\overline{M}_n$ des thermoplastischen aliphatischen Polyurethanpolymers in einem Bereich von 3 bis 8, vorzugsweise in einem Bereich von 4 bis 6, besonders bevorzugt in einem Bereich von 4,5 bis 6 liegt, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm³ aufgelöst wurde und ein Polymethylmethacrylatstandard verwendet wurde.

In einer vierten Ausführungsform betrifft die Erfindung ein thermoplastisches aliphatisches Polyurethanpolymer nach einer der Ausführungsformen 1 bis 3, wobei das Verhältnis $\overline{M}_z$ / $\overline{M}_w$ des thermoplastischen aliphatischen Polyurethanpolymers in einem Bereich von 2,5 bis 5 vorzugsweise in einem Bereich von 2,5 bis 4 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm³ aufgelöst wurde und ein Polymethylmethacrylatstandard verwendet wurde.

In einer fünften Ausführungsform betrifft die Erfindung ein thermoplastisches aliphatisches Polyurethanpolymer nach einer der Ausführungsformen 1 bis 4, wobei das thermoplastische aliphatische Polyurethanpolymer durch Umsetzung von einem oder mehreren aliphatischen Polyisocyanaten mit einem Molekulargewicht im Bereich von ≥ 140 g/mol bis ≤ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Polyolen, vorzugsweise einem oder mehreren aliphatischen Diolen mit einem Molekulargewicht im Bereich von 62 g/mol bis 210 g/mol, besonders bevorzugt einem oder mehreren aliphatischen Diolen mit einem Molekulargewicht im Bereich von 62 g/mol bis 120 g/mol erhältlich ist.

In einer sechsten Ausführungsform betrifft die Erfindung ein thermoplastisches aliphatisches Polyurethanpolymer nach einer der Ausführungsformen 1 bis 5, wobei das thermoplastische aliphatische Polyurethanpolymer zu mindestens 80 Gew.-%, vorzugsweise zu mindestens 90 Gew.-%, besonders bevorzugt zu mindestens 95 Gew.-%, noch bevorzugter zu mindestens 98 Gew.-%, noch mehr bevorzugter zu mindestens 99 Gew.-%, und am bevorzugtesten zu mindestens 99,9 Gew.-% aus dem Reaktionsprodukt der Umsetzung von 1,6-Hexamethylendiisocyanat mit 1,4-Butandiol besteht, bezogen auf die Gesamtmasse des thermoplastischen aliphatischen Polyurethanpolymers.

In einer siebten Ausführungsform betrifft die Erfindung ein thermoplastisches aliphatisches Polyurethanpolymer nach einer der Ausführungsformen 1 bis 6, wobei dass das thermoplastische aliphatische Polyurethanpolymer eine Peak-Kristallisationstemperatur im Bereich von 130 °C bis 145 °C aufweist, vorzugsweise eine Peak-Kristallisationstemperatur im Bereich von 140 °C bis 145 °C aufweist, bestimmt mit Dynamischer Differenzkalorimetrie (DSC) gemäß DIN EN ISO 11357-1:2017-02.

In einer achten Ausführungsform betrifft die Erfindung ein Verfahren zur Herstellung eines thermoplastischen aliphatischen Polyurethanpolymers gemäß einer der Ausführungsformen 1 bis 7 dadurch gekennzeichnet, dass in einem ersten Schritt zumindest ein oder mehrere aliphatische Polyisocyanate mit einem oder mehreren aliphatischen Polyolen, gegebenenfalls in Gegenwart eines Katalysators und/ oder Hilfs- und Zusatzstoffen, zu mindestens einem Prepolymer umgesetzt werden, vorzugsweise zu mindestens einem Hydroxy-terminierten Prepolymer, und das im ersten Schritt erhaltende mindestens eine Prepolymer in einem zweiten Schritt mit mindestens einem Kettenverlängerer, vorzugsweise mindestens einem Polyisocyanat, besonders bevorzugt mindestens einem Diisocyanat, zum thermoplastischen Polyurethanpolymer umgesetzt wird.

In einer neunten Ausführungsform betrifft die Erfindung ein Verfahren gemäß der Ausführungsform 8, wobei als aliphatisches Polyisocyanat ein aliphatisches Diisocyanat eingesetzt wird, vorzugweise ein aliphatisches Polyisocyanat eingesetzt wird ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan und/oder Mischungen aus mindestens 2 hieraus, besonders bevorzugt ein aliphatisches Polyisocyanat eingesetzt wird ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch bevorzugter als aliphatisches Polyisocyanat 1,6-Diisocyanatohexan (HDI) eingesetzt wird.

In einer zehnten Ausführungsform betrifft die Erfindung ein Verfahren gemäß einer der Ausführungsformen 8 oder 9, wobei als aliphatisches Polyol ein aliphatisches Diol eingesetzt wird, vorzugsweise ein aliphatisches Polyol eingesetzt wird ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und/oder Mischungen aus mindestens 2 hieraus, besonders bevorzugt ein aliphatisches Polyol eingesetzt wird ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, noch bevorzugter als aliphatisches Polyol 1,4-Butandiol eingesetzt wird.

In einer elften Ausführungsform betrifft die Erfindung ein Verfahren gemäß einer der Ausführungsformen 8 bis 10, wobei das Verfahren in einen Schlaufenreaktor (Loop-Reactor) oder in einen Mischer vorzugsweise in einem Statikmischer durchgeführt wird, besonders bevorzugt wird das erfindungsgemäße Verfahren in einen Schlaufenreaktor (Loop-Reactor) durchgeführt.

In einer zwölften Ausführungsform betrifft die Erfindung ein Verfahren gemäß einer der Ausführungsformen 8 bis 11, wobei das Verfahren ein kontinuierliches Verfahren ist.

In einer dreizehnten Ausführungsform betrifft die Erfindung ein Verfahren gemäß einer der Ausführungsformen 8 bis 12, wobei das Verfahren ein lösungsmittelfreies Verfahren ist.

In einer vierzehnten Ausführungsform betrifft die Erfindung ein Verfahren gemäß einer der Ausführungsformen 8 bis 13, wobei die Herstellung des mindestens einen Prepolymers, vorzugsweise zu mindestens einen Hydroxy-terminierten Prepolymers katalysatorfrei erfolgt.

In einer fünfzehnten Ausführungsform betrifft die Erfindung ein Verfahren gemäß einer der Ausführungsformen 8 bis 14, wobei das mindestens eine Prepolymer in einem zweiten Schritt mit mindestens einem Kettenverlängerer, vorzugsweise mindestens einem Polyisocyanat, besonders bevorzugt mindestens einem Diisocyanat, katalysatorfrei zum thermoplastischen Polyurethanpolymer umgesetzt wird.

In einer sechzehnten Ausführungsform betrifft die Erfindung ein thermoplastisches aliphatisches Polyurethanpolymer erhältlich oder erhalten durch ein Verfahren gemäß einer der Ausführungsformen 8 bis 15.

In einer siebzehnten Ausführungsform betrifft die Erfindung eine Zusammensetzung enthaltend mindestens ein thermoplastisches aliphatisches Polyurethanpolymer nach einer der Ausführungsformen 1 bis 7 und mindestens ein Additiv und / oder ein weiteres thermoplastisches Polymer.

In einer achtzehnten Ausführungsform betrifft die Erfindung eine thermoplastische Formmasse, dadurch gekennzeichnet, dass sie mindestens eine Zusammensetzung nach Ausführungsform 17 umfasst.

In einer neunzehnten Ausführungsform betrifft die Erfindung einen Formkörper, Folie und / oder Faser dadurch gekennzeichnet, dass der Formkörper, die Folie oder die Faser mindestens ein thermoplastisches Polyurethanpolymer nach einer der Ausführungsformen 1 bis 7, mindestens eine thermoplastische Formmasse nach Ausführungsform 18 oder mindestens eine Zusammensetzung nach Ausführungsform 17 umfasst.

In einer zwanzigsten Ausführungsform betrifft die Erfindung die Verwendung eines thermoplastischen Polyurethanpolymers nach einer der Ausführungsformen 1 bis 7, einer thermoplastischen Formmasse nach Ausführungsform 18 oder einer Zusammensetzung nach Ausführungsform 17 zur Herstellung eines Formkörpers, einer Folie und / oder einer Faser.

In einer einundzwanzigsten Ausführungsform betrifft die Erfindung die Verwendung eines thermoplastischen Polyurethanpolymers nach einer der Ausführungsformen 1 bis 7 zur Herstellung einer Zusammensetzung, einer thermoplastischen Formmasse oder einer Polyurethan-Dispersion.

In einer zweiundzwanzigsten Ausführungsform betrifft die Erfindung einen Artikel umfassend oder enthaltend ein thermoplastisches Polyurethanpolymer nach einer der Ausführungsformen 1 bis 7 oder eine Zusammensetzung nach Ausführungsform 17.

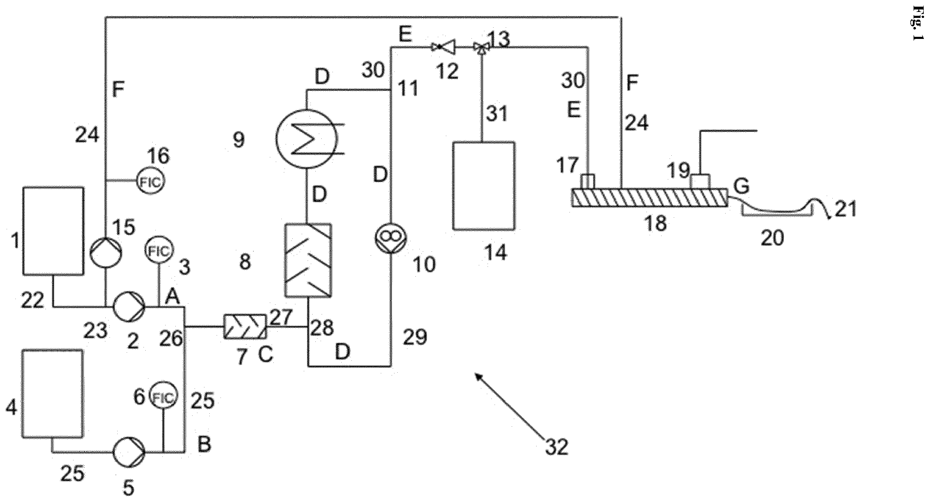

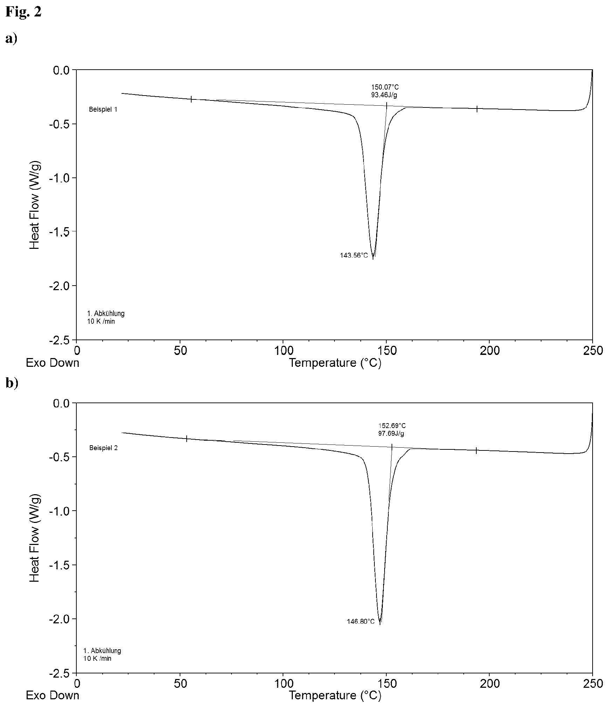

Die vorliegende Erfindung wird im Folgenden anhand der Figuren 1 und 2 näher erörtert. Darin zeigt

Fig. 1    eine Vorrichtung zur Durchführung des erfindungsgemäßen Verfahrens, sowie

Fig. 2    ein Thermogramm aus einer Differentialthermoanalyse eines Polyurethans, das

a) mit dem erfindungsgemäßen Verfahren hergestellt wurde und
b) nach einem nicht-erfindungsgemäßen Verfahren hergestellt wurde.

**Beispiele**

Die vorliegende Erfindung wird anhand der nachfolgenden Beispiele weiter erläutert, ohne jedoch darauf beschränkt zu sein.

Es wurden zwei thermoplastische Polyurethanpolymere miteinander verglichen, die mit unterschiedlichen Syntheseverfahren hergestellt wurden, dabei wurden die Schmelzenthalpie und das Molekulargewicht dieser beiden Polyurethanpolymere untersucht.

Bestimmung der Kristallisationsenthalpie

Die Bestimmung der Kristallisationsenthalpie erfolgt mittels Dynamischer Differenzkalorimetrie (engl. Differential scanning calorimetry, DSC) anhand DIN EN ISO 11357-1:2017-02. Die Messung erfolgte an einer Q2000 (TA Instruments). Es wurden zwei Aufheizungen und die Abkühlung im Bereich 20 °C bis 250 °C mit einer Heiz-/Kühlrate von 10 K/min durchgeführt. Die Probenmasse betrug circa 6 mg. Der Spülgasstrom (Stickstoff) betrug 50 ml/min.

Bestimmung des Molekulargewichtes

GPC-Methode zur Bestimmung von $M_n$ und $M_w$:
Das Zahlenmittel und das Massenmittel der Molmasse wurden mit Hilfe einer Gelpermeationschromatographie (GPC) bestimmt, wobei die zu untersuchende Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde,.

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7 $\mu$m, 300 Å PSS PFG 7 $\mu$m, 100 Å PSS PFG 7 $\mu$m in dieser Reihenfolge (PSS Polymer Standards Service GmbH) |
| Entgasung: | Degaser PSS (PSS Polymer Standards Service GmbH) |
| Injektionsvolumen: | 100 Mikroliter |
| Temperatur: | 23 °C - 25 °C |
| Molmassen-Standard: | Polymethylmethacrylat-Standard-Kit (PSS Polymer Standards Service GmbH) |

Falls nicht explizit anders angegeben, wurden in der vorliegende Erfindung das Zentrifugenmittel der Molmasse $M_z$ mittels Gelpermeationschromatographie (GPC) unter Verwendung von Polymethylmethacrylat als Standard bestimmt. Die zu vermessende Probe wurde in einer Lösung von 3 g Kaliumtrifluoracetat in 400 Kubikzentimeter Hexafluorisopropanol aufgelöst (Probenkonzentration ca. 2 mg/Kubikzentimeter) und dann mit einer Flussrate von 1 Kubikzentimeter/Minute über eine Vorsäule gegeben und dann über drei in Reihe geschaltete Chromatographiesäulen getrennt, zuerst über eine 1000 Å PSS PFG 7 $\mu$m Chromatographiesäule, dann über eine 300 Å PSS PFG 7 $\mu$m Chromatographiesäule und zuletzt über eine 100 Å PSS PFG 7 $\mu$m Chromatographiesäule. Als Detektor wurde ein Brechungsindex-Detektor (RI-Detektor) verwendet. Das zahlengemittelte Molekulargewicht wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \quad \text{in g/mol}$$

wobei,
$M_i$ die molare Masse der Polymere der Fraktion $i$ ist, so dass $M_i < M_{i+1}$ für alle $i$, in g/mol ist, $n_i$ die Stoffmenge des Polymers der Fraktion $i$, in mol ist.
Das zentrifugengemittelte Molekulargewicht wurde aus den durch die Messung der Gelpermeationschromatographie erhaltenen Daten mit Hilfe der folgenden Gleichung errechnet:

$$\overline{M}_z = \frac{\sum_i n_i M_i{}^3}{\sum_i n_i M_i{}^2},$$

wobei, $M_i$ die molare Masse der Polymere der Fraktion $i$ ist, so dass $M_i < M_{i+1}$ für alle $i$, in g/mol ist, $n_i$ die Stoffmenge des Polymers der Fraktion $i$, in mol ist.

Erfindungsgemäßes Beispiel 1

Aus einer 250 - Liter - Vorlage 1 für 1,6-Hexamethylendiisocyanat wurde mit Hilfe einer Zahnringpumpe 2 (Firma HNP, MZR 7255) ein Polyisocyanatstrom A bestehend aus 1,6-Hexamethylendiisocyanat zu einem Statikmischer 7 gefördert. Der Durchsatz des Polyisocyanatstroms A wurde mittels eines Massendurchflussmessers 3 (Firma Bronkhorst, Mini Cori-Flow M1X, max. Durchfluss 12 kg/h) gemessen. Die Temperatur des 1,6-Hexamethylendiisocyanats betrug dabei Raumtemperatur.
Aus einer 250 - Liter - Vorlage 4 für 1,4-Butandiol wurde mit Hilfe einer Zahnringpumpe 5 (Firma HNP, MZR 7205) ein Polyolstrom B bestehend aus 1,4-Butandiol zum Statikmischer 7 gefördert. Der Durchsatz des Polyolstroms B wurde mittels eines Massendurchflussmessers 6 (Firma Bronkhorst, Mini Cori-Flow M1X, max. Durchfluss 8 kg/h) gemessen. Die Temperatur des 1,4-Butandiols betrug 40 °C.
In dem Statikmischer 7 (Sulzer SMX, Durchmesser 6 mm, Verhältnis von Länge zu Durchmesser L/D = 10) wurden der Polyisocyanatstrom A und der Polyolstrom B miteinander gemischt, so dass ein Mischungsstrom C erhalten wurde. Die Massenströme des Polyisocyanatstroms A und des Polyolstroms B wurden so eingestellt, dass der Isocyanat-Index im Mischungsstrom C 78 betrug. Mischungsstrom C wurde über eine Einmündung 28 in die Kreislaufleitung 29 geleitet, in dem ein Kreislaufstrom D in einem Kreislauf geführt wurde. Stromabwärts der Einmündung 28 wurde der Kreislaufstrom D in einen Statikmischer 8 (Statikmischer äquivalent zu Sulzer SMX, Innendurchmesser 34 mm, L/D=20) geführt. Die Temperatur des Prepolymerstromes D betrug 182 °C.

Stromabwärts des Statikmischers 8 wurde der Kreislaufstrom D in einen temperierbaren statischen Mischer 9 geführt. Dort fand die Oligomerisierung des Kreislaufstroms D mit Mischungsstrom C zum großen Teil statt und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer 9 trat der Kreislaufstrom D mit einer Temperatur von 183 °C aus. Stromabwärts des temperierbaren statischen Mischers 9 wurde an einer Einmündung 11 ein Prepolymerstrom E aus dem Kreislaufstrom D abgeteilt und der Kreislaufstrom D weiter zu einer Zahnradpumpe 10 geführt. Der Prepolymerstrom E wurde in einen Extruder 18 geleitet.

Der Druck des Kreislaufstroms D wurde an einer Zahnradpumpe 10 erhöht. Die Zahnradpumpe 10 (Firma Witte Chem 25,6-3) hatte ein Volumen pro Umdrehung von 25,6 Kubikzentimeter und eine Drehzahl von 50 pro Minute. Der Kreislaufstrom D wurde stromabwärts der Pumpe an Einmündung 28 mit Mischungsstrom C vereinigt, wie bereits beschrieben.

Die Kreislaufleitung 29 bestand aus doppelwandig ausgeführten Rohrleitungen, die mit Thermoöl beheizt waren. Die Heizmitteltemperatur betrug 182 °C. Der Statikmischer 8, der temperierbare statischen Mischer 9 und die Zahnradpumpe 10 bestanden aus Apparaten, die mit Thermoöl beheizt waren. Die Heizmitteltemperatur betrug 182 °C.

Die Reaktivextrusion wurde in einem Extruder 18 bei einer Temperatur von 200 °C und einer Drehzahl von 66 Umdrehungen pro Minute durchgeführt. Der Extruder 18 war ein ZSK 26 MC der Firma Coperion, mit einem Schneckendurchmesser von 26 mm und einem Länge zu Durchmesser Verhältnis von 36 bis 40.

An dem Extruder 18 befand sich eine Entlüftung 17, die bei ca. 1 mbar Unterdruck gegenüber dem Normaldruck betrieben wurde und in der Prepolymerstrom E von eventuell mit dem Polyisocyanatstrom A und dem Polyolstrom B eingeschleppten Inertgasen und möglichen gasförmigen Reaktionsprodukten befreit wurde.

Aus Vorlage 1 wurde mit Hilfe einer Mikrozahnringpumpe 15 (MZR 6355 der Firma HNP) ein Isocyanatzuführungsstrom F bestehend aus 1,6-Hexamethylendiisocyanat entnommen. Der Durchsatz des Isocyanatzuführungsstroms F wurde mittels eines Massendurchflussmessers 16 (Firma Bronkhorst, Mini Cori-Flow, M1X, maximaler Durchfluss 2 kg/h) gemessen. Die Temperatur des 1,6-Hexamethylendiisocyanat betrug Raumtemperatur. Der Isocyanatzuführungsstrom F wurde stromabwärts des Prepolymerstroms E in den Extruder 18 geleitet. In dem Extruder 18 wurde der Prepolymerstrom E mit dem Isocyanatzuführungsstrom F bei einem Isocyanatindex von 99 zu einem thermoplastischen Polyurethan G umgesetzt.

Am in Durchflussrichtung betrachtet letzten Drittel des Extruders 18 war eine Entgasung 19 angeordnet an der das thermoplastische Polyurethan G bei 200 mbar unter Normaldruck mit Hilfe eines Vakuumdoms, der auf einem Entgasungsschacht des Extruders angeordnet war, von flüchtigen Bestandteilen befreit wurde. Das thermoplastische Polyurethan G wurde nach dem Austritt aus dem Extruder 18 durch zwei Düsen in einem mit deionisierten Wasser (VE-Wasser) gefüllten Wasserbad 20 abgekühlt und durch einen Granulator 21 zu Granulat zerschnitten.

Tabelle 1: Stoffströme bei der Herstellung des TPU in Beispiel 1

|  | [kg/h] |
|---|---|
| Strom A (HDI) | 2,911 |
| Strom B (BDO) | 2,000 |
| Strom J (HDI) | 0,784 |
| Strom E (Prepolymer) | 120 |

Referenzbeispiel 2:

In einem Rührkessel (250 ml) wurden 24,59 g 1,4-Butandiol für 30 Minuten unter Rühren (170 Umdrehung pro Minute (U/min)) und Stickstoffeinleitung auf 90 °C geheizt. Anschließend wurde über einen Zeitraum von 45 Minuten 45,39 g HDI kontinuierlich zu dem Butandiol dosiert. Hierbei wurde die Temperatur des Reaktionsgemisches konstant um 4 °C pro Minute erhöht, bis eine Temperatur von 190 °C erreicht wurde (25 Minuten). Sobald eine Produkttemperatur von 190 °C erreicht wurde, wurde die Geschwindigkeit des Rührers auf 300 U/min erhöht. Die Temperatur im Rührkessel wurde konstant zwischen 190 °C und 200 °C gehalten.

Nach Ende der HDI Dosierung wurde die Schmelze weitere 5 Minuten gerührt. Anschließend wurde sie im heißen Zustand in eine Aluminiumform gegossen.

Ergebnisse

Die Schmelzenthalpie und die Molekulargewichte der aus den Beispielen 1 und 2 erhaltenen thermoplastischen Polyurethane wurden nach den oben beschriebenen Verfahren untersucht. Die Ergebnisse sind in Tabelle 2 zusammengefasst:

Tabelle 2: Schmelzenthalpie und Molekulargewicht der erhaltenen Polyurethane

|  | Erfindungsgemäß Beispiel 1 | Vergleich Beispiel 2 |
|---|---|---|
| $M_w$ [g/mol] | 58.510 | 60.020 |
| $M_w/M_n$ | 4,97 | 2,55 |
| $M_z/M_w$ | 2,71 | 2,05 |
| Kristallisationsenthalpie $\Delta H_C$ [J/g] | 93,5 | 97,7 |
| Onset-Kristallisationstemperatur [C°] | 150,1 | 152,7 |
| Peak-Kristallisationstemperatur [C°] | 143,6 | 146,8 |
| $\Delta H_{Kristall,100\%}$ [J/g] | 188 | 188 |
| Kristallinitätsgrad $\chi$ [%] | 49,7 | 52,0 |

Die DSC Thermogramme der beiden untersuchten Materialien sind in Figur 2 dargestellt. Die thermoplastischen Polyurethane aus den Beispielen 1 und 2 weisen jeweils ein massengemitteltes Molekulargewicht in einem ähnlichen Bereich von 58.000 g/mol bis ca. 60.000 g/mol auf und auch ähnliche Schmelztemperaturen im Bereich von 183 °C bis 186 °C. Allerdings weist das erfindungsgemäße TPU eine um 4,3 % geringere Kristallisationsenthalpie im Vergleich zum TPU des Vergleichsbeispiels auf. Aufgrund der niedrigeren Kristallisationsenthalpie des erfindungsgemäßen TPU muss bei der Weiterverarbeitung durch Aufschmelzen und nachfolgender Formgebung weniger Energie für das Aufschmelzen aufgebracht werden, als für die Weiterverarbeitung des TPU aus dem Vergleichsbeispiel. Wird für das Aufschmelzen der thermoplastischen Polyurethane aus den beiden Beispielen jeweils die gleiche Menge an Energie verwendet, so schmilzt das erfindungsgemäße TPU schneller.

**Patentansprüche**

1. Thermoplastisches aliphatisches Polyurethanpolymer, **dadurch gekennzeichnet, dass** das Verhältnis $\overline{M}_z / \overline{M}_w$ des thermoplastischen aliphatischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde und das thermoplastisches aliphatisches Polyurethanpolymer einen Kristallinitätsgrad $\chi$ im Bereich von 10 % bis 51 % aufweist, wobei der Kristallinitätsgrad $\chi$ gemäß der folgenden Gleichung bestimmt wird:

$$\chi = (\Delta H_{C,Polymer}/\Delta H_{Kristall,100\%}) \cdot 100\%,$$

wobei $\Delta H_{C,Polymer}$ die gemessene Kristallisationsenthalpie in [J/g] des thermoplastischen aliphatischen Polyurethanpolymers ist, ermittelt mit Dynamischer Differenzkalorimetrie (DSC) gemäß DIN EN ISO 11357-1:2017-02 mit einer Kühlrate von 10 K/min im Bereich von 250 °C bis 20 °C, und $\Delta H_{Kristall,100\%}$ die Schmelzenthalpie des entsprechenden zu 100 % kristallinen thermoplastischen aliphatischen Polyurethanpolymers in [J/g] ist, ermittelt mit Dynamischer Differenzkalorimetrie und Röntgenstreuanalyse.

2. Thermoplastisches aliphatisches Polyurethanpolymer nach Anspruch 1, **dadurch gekennzeichnet, dass** das thermoplastische aliphatische Polyurethanpolymer einen Kristallinitätsgrad $\chi$ im Bereich von 20 % bis 51 %, bevorzugt im Bereich von 30 % bis 50 %, besonders bevorzugt im Bereich von 40 % bis 50 % aufweist.

3. Thermoplastisches aliphatisches Polyurethanpolymer nach Anspruch 1 oder 2, **dadurch gekennzeichnet, dass** das Verhältnis $\overline{M}_w / \overline{M}_n$ des thermoplastischen aliphatischen Polyurethanpolymers in einem Bereich von 3 bis 8, vorzugsweise in einem Bereich von 4 bis 6, besonders bevorzugt in einem Bereich von 4,5 bis 6 liegt, wobei $\overline{M}_n$ das Zahlenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

4. Thermoplastisches aliphatisches Polyurethanpolymer nach einem der Ansprüche 1 bis 3, **dadurch gekennzeichnet, dass** das Verhältnis $\overline{M}_z / \overline{M}_w$ des thermoplastischen aliphatischen Polyurethanpolymers in einem Bereich von 2,5 bis 5 vorzugsweise in einem Bereich von 2,5 bis 4 liegt, wobei $\overline{M}_z$ das Zentrifugenmittel der Molmasse und $\overline{M}_w$ das Massenmittel der Molmasse ist, jeweils ermittelt mit Gelpermeationschromatographie, wobei die Probe in einer Lösung aus Kaliumtrifluoracetat in Hexafluorisopropanol mit einer Konzentration von 2 mg/cm$^3$ aufgelöst wurde und ein Polymethylmethacrylatstandard verwendet wurde.

5. Thermoplastisches aliphatisches Polyurethanpolymer nach einem der Ansprüche 1 bis 4, **dadurch gekennzeichnet, dass** das thermoplastische aliphatische Polyurethanpolymer durch Umsetzung von einem oder mehreren aliphatischen Polyisocyanaten mit einem Molekulargewicht im Bereich von $\geq$ 140 g/mol bis $\leq$ 400 g/mol, vorzugsweise von einem oder mehreren aliphatischen Diisocyanaten mit einem Molekulargewicht im Bereich von 140 g/mol bis 170 g/mol, mit einem oder mehreren aliphatischen Polyolen, vorzugsweise einem oder mehreren aliphatischen Diolen mit einem Molekulargewicht im Bereich von 62 g/mol bis 210 g/mol, besonders bevorzugt einem oder mehreren aliphatischen Diolen mit einem Molekulargewicht im Bereich von 62 g/mol bis 120 g/mol erhältlich ist.

6. Thermoplastisches aliphatisches Polyurethanpolymer nach einem der Ansprüche 1 bis 5, **dadurch gekennzeichnet, dass** das thermoplastische aliphatische Polyurethanpolymer zu mindestens 80 Gew.-%, vorzugsweise zu mindestens 90 Gew.-%, besonders bevorzugt zu mindestens 95 Gew.-%, noch bevorzugter zu mindestens 98 Gew.-%, noch mehr bevorzugter zu mindestens 99 Gew.-%, und am bevorzugtesten zu mindestens 99,9 Gew.-% aus dem Reaktionsprodukt der Umsetzung von 1,6-Hexamethylendiisocyanat mit 1,4-Butandiol besteht, bezogen auf die Gesamtmasse des thermoplastischen aliphatischen Polyurethanpolymers.

7. Thermoplastisches aliphatisches Polyurethanpolymer nach einem der Ansprüche 1 bis 6, **dadurch gekennzeichnet, dass** das thermoplastische aliphatische Polyurethanpolymer eine Peak-Kristallisationstemperatur im Bereich von 130 °C bis 145 °C aufweist, vorzugsweise eine Peak-Kristallisationstemperatur im Bereich von 140 °C bis 145 °C aufweist, bestimmt mit Dynamischer Differenzkalorimetrie (DSC) gemäß DIN EN ISO 11357-1:2017-02.

8. Verfahren zur Herstellung eines thermoplastischen aliphatischen Polyurethanpolymers nach einem der Ansprüche 1 bis 7 **dadurch gekennzeichnet, dass** in einem ersten Schritt zumindest ein oder mehrere aliphatische Polyisocyanate mit einem oder mehreren aliphatischen Polyolen, gegebenenfalls in Gegenwart eines Katalysators und/oder Hilfs- und Zusatzstoffen, zu mindestens einem Prepolymer umgesetzt werden, vorzugsweise zu mindestens einem Hydroxy-terminierten Prepolymer, und das im ersten Schritt erhaltende mindestens eine Prepolymer in einem zweiten Schritt mit mindestens einem Kettenverlängerer, vorzugsweise mindestens einem Polyisocyanat, besonders bevorzugt mindestens einem Diisocyanat, zum thermoplastischen Polyurethanpolymer umgesetzt wird.

9. Verfahren nach Anspruch 8, **dadurch gekennzeichnet, dass** unabhängig von einander als aliphatisches Polyisocyanat ein aliphatisches Diisocyanat eingesetzt wird, vorzugweise ein aliphatisches Polyisocyanat eingesetzt wird ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan und/oder Mischungen aus mindestens 2 hieraus, besonders bevorzugt ein aliphatisches Polyisocyanat eingesetzt wird ausgewählt aus der Gruppe bestehend aus 1,4-Diisocyanatobutan (BDI), 1,5-Diisocyanatopentan (PDI), 1,6-Diisocyanatohexan (HDI) und/oder Mischungen aus mindestens 2 hieraus und noch bevorzugter als aliphatisches Polyisocyanat 1,6-Diisocyanatohexan (HDI) eingesetzt wird, und als aliphatisches Polyol ein aliphatisches Diol eingesetzt wird, vorzugsweise ein aliphatisches Polyol eingesetzt wird ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol und/oder Mischungen aus mindestens 2 hieraus, besonders bevorzugt ein aliphatisches Polyol eingesetzt wird ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und/oder Mischungen aus mindestens 2 hieraus, noch bevorzugter als aliphatisches Polyol 1,4-Butandiol eingesetzt wird.

10. Zusammensetzung enthaltend mindestens ein thermoplastisches aliphatisches Polyurethanpolymer nach einem der Ansprüche 1 bis 7 und mindestens ein Additiv und / oder ein weiteres thermoplastisches Polymer.

11. Thermoplastische Formmasse, **dadurch gekennzeichnet, dass** sie mindestens eine Zusammensetzung nach Anspruch 10 umfasst.

12. Formkörper, Folie und / oder Faser **dadurch gekennzeichnet, dass** der Formkörper, die Folie oder die Faser mindestens ein thermoplastisches Polyurethanpolymer nach einem der Ansprüche 1-7, mindestens eine thermoplastische Formmasse nach Anspruch 11 oder mindestens eine Zusammensetzung nach Anspruch 10 umfasst.

13. Verwendung eines thermoplastischen Polyurethanpolymers nach einem der Ansprüche 1-7, einer thermoplastischen Formmasse nach Anspruch 11 oder einer Zusammensetzung nach Anspruch 10 zur Herstellung eines Formkörpers, einer Folie und / oder einer Faser.

14. Verwendung von thermoplastischem aliphatischen Polyurethanpolymer nach einem der Ansprüche 1 bis 7 zur Herstellung einer Zusammensetzung, einer thermoplastischen Formmasse oder einer Polyurethan-Dispersion.

15. Artikel umfassend oder enthaltend ein thermoplastisches aliphatisches Polyurethanpolymer nach einem der Ansprüche 1 bis 7 oder eine Zusammensetzung nach Anspruch 10.

**Fig. 1**

Fig. 2

a)

b)

**Europäisches Patentamt**

**European Patent Office**

**Office européen des brevets**

## EUROPÄISCHER RECHERCHENBERICHT

Nummer der Anmeldung

EP 19 21 6785

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 385 075 A1 (PPG IND OHIO INC [US]) 9. November 2011 (2011-11-09) * Formulation 2; Absatz [0261] *  ----- | 1-15 | INV. C08G18/10 C08G18/32 C08G18/73 |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 26. März 2020 | Sütterlin, Martin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 19 21 6785

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2020

| Im Recherchenbericht angeführtes Patentdokument | Datum der Veröffentlichung | Mitglied(er) der Patentfamilie | Datum der Veröffentlichung |
|---|---|---|---|
| EP 2385075 A1 | 09-11-2011 | CA 2641773 A1 | 21-06-2007 |
| | | CA 2647094 A1 | 06-12-2007 |
| | | CA 2647153 A1 | 28-06-2007 |
| | | EP 2004717 A2 | 24-12-2008 |
| | | EP 2004719 A1 | 24-12-2008 |
| | | EP 2004720 A2 | 24-12-2008 |
| | | EP 2385075 A1 | 09-11-2011 |
| | | ES 2385359 T3 | 23-07-2012 |
| | | ES 2388618 T3 | 17-10-2012 |
| | | ES 2408598 T3 | 21-06-2013 |
| | | ES 2430245 T3 | 19-11-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1846526 A1
- EP 2004720 A1
- EP 0433823 A1
- DE 2901774 A

**In der Beschreibung aufgeführte Nicht-Patentliteratur**

- **KAJIYAMA, T. ; MACKNIGHT, W.J.** *Polymer Journal,* 1970, vol. 1, 548-554
- Methoden der organischen Chemie. **HOUBEN-WEYL.** Makromolekulare Stoffe. Georg Thieme Verlag, 1987, vol. E20, 1587-1593
- Justus Liebigs Annalen der Chemie. 1949, vol. 562, 75-136
- High Polymers. **VON J.H. SAUNDERS ; K.C. FRISCH.** Polyurethane. Verlag Interscience Publishers, 1962, vol. XVI
- **VON R. GÄCHTER ; U. H. MÜLLER.** Taschenbuch für Kunststoff-Additive. Hanser Verlag, 1990